# EUROPEAN PATENT APPLICATION

(11) **EP 4 703 664 A1**
(43) Date of publication of application: **04.03.2026**
(21) Application number: 24382931.4
(22) Date of filing: 29.08.2024
(51) Int. Cl.: F26B 15/08

(54) **ADJUSTABLE DISPLACEMENT SYSTEM FOR MULTI-FORMAT LIDS**

(71) Applicant: Industrias Peñalver, S.L., 30500 Molina de Segura (Murcia) (ES)
(72) Inventor: PEÑALVER GARCÍA, José, 30500 Molina de Segura (Murcia) (ES)
(74) Representative: Ungria López, Javier

(57) **Abstract**

The present invention relates to an adjustable system for displacing multi-format lids (4), comprising a drive mechanism which in turn comprises an upper rotation system with two upper gearwheels (5a, 5b), parallel and separated by a length, in a first transverse direction, a lower rotation system with two lower gearwheels (6a, 6b); also parallel and separated by a length, in the same first transverse direction; a first chain (1a) geared to a first upper gearwheel (5a) and to a first lower gearwheel (6a); a second chain (1b) geared to a second upper gearwheel (5b) and to a second lower gearwheel (6b) and a chassis (10) on which the rotation systems are mounted. The first chain (1a) and the second chain (1b) transmit the rotation between the gearwheels (5a, 5b, 6a, 6b). The first chain (1a) and the second chain (1b) comprise lid fastening means (4) for holding the lids (4) during the displacement thereof. The adjustable system also comprises a first transverse adjustment mechanism configured to modify the separation length between the first gearwheels (5a, 6a) and the second gearwheels (5b, 6b), as well as between the first chain (1a) and the second chain (1b), within a range comprising a first end having a greater length and a second end having a shorter length.

## Description

### TECHNICAL FIELD

The present invention consists of a system for displacing lids for containers, such as those used for canning jars, in a longitudinal direction, preferably in an oven, or towards and/or from an oven, such that said system is adjustable, which allows it to graduate or modify the distance of some of its components in order to displace lids with different sizes and/or shapes. In other words, the system is focussed and designed to allow the use of various lid sizes that require a format change.

The sector in which the invention is found is the industry of automation of manufacturing and packaging processes, such as packaging of canned perishable or non-perishable products in jars, but also non-consumable products that require airtight packaging.

### BACKGROUND OF THE INVENTION

Automation in manufacturing processes is currently in a state of continuous development and transformation, the market in said sector being in continuous adaptation to the increasingly varied demands of customers. Thus, it is no longer sufficient to provide processes that allow high production in short times, but it is also necessary to be able to adapt to the variety of available products, as well as to the different manufacturing processes of a product.

It has been noted in this type of industry, which covers the entire food and beverage packaging sector, that customers are increasingly demanding smaller batches of products, but especially more varied in their production, which allows said product to be easily differentiated from its competitors. For this reason, the production machinery currently being developed in this sector is focussed on making different format and size changes that allow it to adapt to the demands of the variety of products requested by customers.

Therefore, format change is an increasingly required process in this industry, since the demand for orders from customers is increasingly varied and personalised, so they require machinery in production plants that is versatile and flexible in order to meet market demands. The implementation of elements and systems in the machine that allow for a quick and efficient format change of the products entails, among many other advantages, considerable savings in installation costs and reductions in downtime, which also lead to considerable savings in expenditure. Therefore, having a format change system on the machine that is quick to execute and being able to configure all the formats that are required by the market to deliver the exact product requested by the customer is a plus and at the same time an advantage for the manufacturer over the competition.

More specifically, there are already various format change systems on the market that are designed to work with lid formats of different sizes and shapes in ovens. These systems are usually eminently manual and with a highly laborious execution, so they require long downtimes during their implementation.

Document ES2212731 discloses a method for drying the exterior lacquering varnish on the lids of easy-open cans for canned foods and others and a device for its implementation. This method consists of drying the lacquering varnish applied to the marginal strip by means of film heating produced therein by an electric current generated by electromagnetic induction, when said lacquered lids run along the shaft of the induction coil of an electromagnetic field, said lids running such that they are positioned horizontally and superimposed, without coming into mutual contact, in the same vertical line. In other words, the method consists of displacing easy-open lids vertically while the varnish dries using an electric current.

Document ES2212730 discloses a method for lacquering the visible face of easy-open lids for canned food, as well as the device for its implementation. This method consists of, in a lacquering station, the sequential motion, promoted by a head, of the non-visible surface of the lid, the mobile head applying a sequential movement thereto, while their visible side is facing a fixed jet nozzle for the varnish. This method involves a vertical displacement of the lids, but does not indicate the possibility of adapting the device used to displace said lids having different sizes or shapes.

Document ES1053256 discloses a machine for lacquering and subsequent drying of easy-open lids of canned foods. Said machine also comprises a vertical lid displacement, wherein a drying of the applied varnish is applied, but which does not disclose any means to regulate or adjust the lid fastening means to different sizes and/or shapes.

### DESCRIPTION OF THE INVENTION

The invention consists of an adjustable system for displacing multi-format lids, especially suitable for the transport of lids in vertical ovens, such as those used to dry the varnishes of said lids. In other words, a lid displacement system, such as those which are defined in the background section, although said adjustable system could also be used in other processes where an adjustable displacement is required for different lid sizes. One of the special features of this system is that, being adjustable, is focussed and designed for use in displacing various lid sizes when a format change is required.

The adjustable system comprises a drive mechanism for displacing the lids, comprising:
- an upper rotation system comprising a first upper gearwheel, and a second upper gearwheel (which may be pinions) oriented in parallel, being separated by a length, in a first transverse direction;
- a lower rotation system comprising a first lower gearwheel and a second lower gearwheel, also oriented in parallel, being separated by a length, in the first transverse direction;
- a first chain geared to the first upper gearwheel and to the first lower gearwheel;
- a second chain geared to the second upper gearwheel and to the second lower gearwheel;
- a chassis on which the rotation systems are mounted;
wherein the upper gearwheel and the first lower gearwheel are located in the same first longitudinal plane; wherein the second upper gearwheel and the second lower gearwheel are located in the same second longitudinal plane. Thus, the length between the first and second gearwheels is the same for the upper and lower rotation system, as well as the distance in the first transverse direction of the chains.

The first chain and the second chain transmit the rotation between the corresponding gearwheels (5a, 5b, 6a, 6b) of the upper rotation system and the lower rotation system; wherein the first chain and the second chain each comprise lid fastening means configured to hold, between them, the lids during the displacement thereof.

Preferably, the gearwheels have a flat configuration, such as the chain rings or sprockets of bicycles, so it can be understood that they occupy a plane that has a longitudinal direction. Likewise, since the first gearwheels are located in the same longitudinal plane, just as the second gearwheels are also located in another longitudinal plane, the corresponding chains are also located in said longitudinal planes. In other words, the first chain is displaced within the longitudinal plane of the first gearwheels, just as the second chain moves along the longitudinal plane of the second gearwheels. In this way, a first and a second longitudinal plane can be defined in the adjustable displacement system.

The fact that the gearwheels are separated by a length in the first transverse direction means that said direction is perpendicular to the longitudinal planes mentioned. Preferably, the first transverse direction is equal to the direction of the axis of rotation of the gearwheels, such that the four axes of rotation of the corresponding four gearwheels comprise the same direction (are parallel). This does not mean that the upper gearwheels have to be mounted on the same axis of rotation, as with the lower gearwheels, but preferably they are, the system comprising two axes, one upper, for the upper gearwheels, and one lower, for the lower gearwheels.

Preferably, all four wheels are the same, although this is not essential. It is especially preferred that the two upper gearwheels are identical, as are the two lower gearwheels.

The main objective of the adjustable system for displacing multi-format lids is to move varnished (wet) lids, so that they can be dried, over a period of time, during a displacement, but the claimed system is not limited to the path of said lids. In other words, it is possible for the lids to be only displaced in straight longitudinal directions, such as upwards or downwards, being introduced and expelled from the lid fastening means, before they perform the rotation that the chains perform on the gearwheels. Moreover, the lids could follow the entire path of the chains, if necessary for drying, also including the curved trajectories generated by the gearwheels, and not only the straight trajectories that connect the upper gearwheels with the lower ones. In this way, it can be understood that the chains have two portions that are seated or geared on the gearwheels and two other non-geared portions, which comprise a longitudinal direction.

When chains are mentioned in this text, the person skilled in the art understands that said term also encompasses equivalent elements for the indicated operation of transmitting rotational movement between the upper and lower rotation systems, such as belts, ropes or similar flexible means, which are common in these systems or mechanisms.

The main difference of this invention, with respect to those indicated in the state of the art, is that the adjustable system also comprises a first transverse adjustment mechanism configured to modify the separation length between the first gearwheels and the second gearwheels, in the first transverse direction, as well as between the first chain and the second chain, within a range comprising a first end having a greater length and a second end having a shorter length. In other words, between the first longitudinal plane and the second longitudinal plane. In this way, the separation length can be increased or reduced, depending on the size or format of the lid to be displaced. If a large lid is to be displaced for drying, the separation length between the wheels can be increased, and if small lids are to be moved, the length can be reduced, thus solving the problems described in the background section for adapting existing systems to multi-format lids.

The separation between the gearwheels of the upper rotation system and the lower rotation system sets the distance between the chains and determines the space available for housing the lid to be displaced, which is inserted between the lid fastening means arranged in pairs on said chains.

The fact that the range is between these two indicated values means that the separation length between the first gearwheels and the second gearwheels can be any length within this range, including infinite available options between both values. In other words, there is no limited number of positions between the wheels and, therefore, between the chains, but rather the regulation allows infinite positions within that range.

In one embodiment, the adjustable system for displacing lids comprises a lid guiding structure, which comprises at least one guide arranged in a longitudinal direction, configured to guide the displacement, in said longitudinal direction, of the lids, between the upper rotation system and the lower rotation system, said lids being fastened by means of the fastening means, to the chains. This guide can be a simple straight rod, having a small profile compared to its length. Special slots are not required, but may be provided if suitable guidance is thereby achieved.

Having a longitudinal direction means that it comprises a straight direction equal to the straight displacement of the lids between the rotation systems. This direction would be within the longitudinal plane, so that, if the system displaces the lids in a vertical direction in a vertical oven as defined in the background, said longitudinal direction is vertical and the first transverse direction is horizontal.

In one embodiment, the lid guiding structure comprises four guides, all of them oriented in the same longitudinal direction. Two first guides, of said four guides, are separated by a distance, measured in a second transverse direction, and are configured to guide the lids, in a first direction of the longitudinal direction, when said lids slide between said two first guides (such as, for example, in an upward direction). The two second guides, of the four guides mentioned, are separated by another same distance, also measured in the second transverse direction, and are configured to guide the lids in a direction opposite to that of the first two guides, in the same longitudinal direction (following the example, in a downward direction) when said lids slide between said two second guides.

In other words, the adjustable system comprises up to four straight guides to facilitate the displacement of the lids in the longitudinal directions; two for one direction and two for the opposite direction, preventing said lids from accidentally moving out of their marked longitudinal trajectory. These guides are separated by a distance, in the same way as the chains comprising the fastening means, however, these guides are separated in a direction perpendicular to the first transverse direction, called the second transverse direction, which is also perpendicular to the longitudinal direction. In this way, each longitudinally displaced lid is limited or fastened by four points located in two perpendicular directions.

In one embodiment, the lid guiding structure can be articulated and comprises a second transverse adjustment mechanism configured to modify the separation distance, in the second transverse direction, between the first two guides and between the second two guides; wherein said separation distance is variable within a range comprising a first end having a greater width and a second end having a smaller width.

As with the separation length between the gearwheels, said range implies that the separation distance between guides can be any value, of the infinite available, between the two extreme values indicated. This means that the distances at which the guides can be placed are not limited to specific values for specific lid sizes, since said guides are not displaced sequentially.

The distance, in the second transverse direction, between these guides is determined by the size and format of the lid to be moved. This measurement may be increased or reduced depending on whether the lid is larger or smaller, in the second transverse direction. The larger the lid size, the greater the distance between the two guides and vice versa. In this way, with the change of lid format, the distance between the two guides is varied so that the guides can be relocated to their new working position.

The term "width" has been used to differentiate it from the term "length" used to indicate the separation between the gearwheels. Making it clear that these are two different distances, in two different transverse directions.

Preferably, the second transverse adjustment mechanism, configured to modify the separation distance, in the second transverse direction, between the first two guides and between the second two guides, comprises a set of elements that are detailed below:
- a drive shaft called an arm-rod shaft. It is a straight rod, oriented in the longitudinal direction, fixed to the chassis of the adjustable system, in an articulated manner hinged with respect to the longitudinal axis that is defined by said straight rod;
- a first lay shaft, parallel to the arm-rod shaft, connected to said arm-rod shaft by means of a geared system, preferably located at ends of both shafts, such that the rotation, with respect to the longitudinal axis, of the arm-rod shaft produces the same rotation of the lay shaft, in the opposite direction;
- two second lay shafts, parallel to the arm-rod shaft and to the first lay shaft, connected to each other by the same geared system, preferably located at ends of both shafts, so that they can rotate with respect to the longitudinal direction, in the opposite direction, in the same way as the first lay shaft and the arm-rod shaft;
- four guide rods, oriented in a transverse plane, each rigidly connected at a first end to one of the following shafts: the arm-rod shaft, the first lay shaft and the two second lay shafts; and rigidly connected at a second end to one of the four guides of the second transverse adjustment mechanism, respectively. In other words, each guide rod rigidly connects one of the axes defined in this assembly and one of the guides defined to guide the lids in the transverse displacement; and
- a tie rod bar, arranged in a transverse direction, configured to transmit the rotation of the arm-rod shaft to one of the two second lay shafts. In this way, the rotation applied to the arm-rod shaft is translated to the rest of the defined shafts, in the indicated directions.

According to the set of elements of the second transverse adjustment mechanism indicated, when the arm-rod shaft rotates on itself, in the longitudinal direction, it produces two rotations of the first lay shaft (also on itself, in the longitudinal direction, but in the opposite direction) and of the two second lay shafts (each in a different direction). Said rotations produce the translations in a second transverse direction of the first and second guides, said translations being the way they have to modify their width according to the size, width-wise, of the lid to be translated. In fact, with the mechanism described, a movement is produced not only in the second transverse direction but also in the first transverse direction by generating a curved movement, due to the joint between the connecting rods and the guides.

In one embodiment, the lid fastening means, comprised in the first chain and in the second chain, comprise a plurality of buckets, where each bucket is joined to at least one link of a chain, where a lid is configured to be fastened, during its displacement, in a trajectory determined by the chains, by at least one bucket, joined to the first chain, and one bucket joined to the second chain. Buckets are the usual means for fastening/displacing lids in systems such as those described in the background section and are especially suitable in this system, which is focussed on displacing lids of different sizes that require a format change.

In one embodiment, the adjustable system comprises an upper shaft on which the two upper gearwheels are mounted and a lower shaft on which the two lower gearwheels are mounted. These shafts can be configured to rotate in solidarity with the corresponding wheels or they can remain fixed, without rotation, comprising only a structural support. Obviously, since the first transverse adjustment mechanism is configured to modify the separation length between the first gearwheels and the second gearwheels, at least one of these wheels, if not both, of each rotation system, must be mounted in a floating manner, so that it can move in the first transverse direction. Likewise, the first transverse adjustment mechanism may comprise locking means.

In one embodiment, the system comprises a wheel hub mounted on the lower shaft. The first lower gearwheel and a second lower gearwheel are float-mounted on the wheel hub, said lower gearwheels being configured to be displaced in the first transverse direction on said wheel hub between the first longer end and the second shorter end. Said hub is mounted on the lower shaft and may comprise elements that allow regular and controlled displacement between the lower gearwheels, ensuring that the same distance is maintained as between the upper gearwheels.

In one embodiment, the first transverse adjustment mechanism comprises:
- a spindle, mounted on at least one bracket support, preferably two supports, one at each end, which is fixed to the chassis, wherein said spindle is configured to rotate on itself, without having to be displaced relative to the chassis, and is oriented in the first transverse direction;
- a first pusher support connected to the spindle by means of a threaded joint, wherein said pusher support is displaceable in the first transverse direction when said spindle rotates on itself;
wherein the pusher support is configured to push and displace the first upper gearwheel in the first transverse direction when said pusher support is displaced. This push may be direct or through other elements that are also displaceable in the first transverse direction.

The spindle can be screwed to the bracket supports using a nut and lock nut at each end. This allows the spindle to rotate relative to the chassis, of which said bracket supports are a part.

The threaded joint between the first pusher support and the spindle converts the rotation of the spindle into the linear displacement of the first pusher support, in the first transverse direction.

In one embodiment, the first transverse adjustment mechanism comprises two facing pusher supports, connected to the spindle by means of a corresponding threaded joint, wherein both pusher supports are displaceable in the first transverse direction, in opposite directions, when said spindle rotates on itself. That is, moving away or coming closer. Each pusher support is configured to push and displace a corresponding upper gearwheel, in the first transverse direction, in opposite directions, when said pusher supports are displaced.

Thus, in this embodiment, it is the two upper gearwheels (as well as the lower ones and the two chains) those which are displaced in the transverse direction, and not just one (as may also be possible and was proposed in the previous embodiment).

In order for the two facing pusher supports to be displaced in opposite directions, when the spindle rotates on itself, it is possible that both the spindle and said supports may have opposite threading directions.

In one embodiment, the adjustable system for displacing lids comprises at least two first chain guides oriented in a longitudinal direction, wherein each first chain guide comprises a longitudinal cavity housing links of the first chain that are aligned in the longitudinal direction, in one of two trajectories connecting the first upper gearwheel with the first lower gearwheel, through said first chain. In other words, these first guides cover, at least partially along the longitudinal trajectories, the links of the first chain, to, among other functions, avoid jams there-between, as well as accidents to operators. Given the movement of the first chain, all the links pass through the longitudinal cavities, in other words, it must be understood that when using the term "links" it relates to a part of the links of the first chain, which are displaced between the wheels.

In one embodiment, the adjustable system for displacing lids comprises two second chain guides oriented in a longitudinal direction, parallel to the first chain guides, wherein each second chain guide comprises a longitudinal cavity housing links of the second chain that are aligned in the longitudinal direction, in one of two trajectories connecting the second upper gearwheel with the second lower gearwheel, through said second chain.

By this embodiment, at least a part of the four longitudinal trajectories of the two chains, specifically a part of the straight sections that join the upper and lower gearwheels, are protected by the links of said two chains being inside the longitudinal cavities of the guides.

In one embodiment, the first transverse adjustment mechanism also comprises a first skate, connected to the first pusher support, configured to move in the first transverse direction when the spindle rotates, on itself, in solidarity with the first pusher support. Said first skate comprises a straight bar oriented in a second transverse direction, the same direction as that indicated in the embodiment of the separation of the first guides. Each first chain guide is connected, by an upper end portion, to an end portion of the bar of the first skate respectively. A straight bar is understood to comprise two end portions.

By this embodiment, the first skate can be rigidly joined to the first pusher support and connected to the spindle by means of a threaded joint, or just one of the two options, provided that the indicated displacement transformation occurs.

In one embodiment, the first transverse adjustment mechanism also comprises a second skate connected to the second pusher support, configured to be displaced in the first transverse direction when the spindle rotates, on itself, in solidarity with the second pusher support, in the opposite direction to the first skate; and wherein said second skate comprises a straight bar oriented in a second transverse direction, parallel to the straight bar of the first skate. Each second chain guide is connected, by an upper end portion, to an end portion of the bar of the second skate respectively.

With these embodiments, the skates, connected to the pusher supports (being displaceable in solidarity therewith) are responsible for transferring the approach and withdrawal movement of the upper gearwheels to the chains, by means of their joint to the chain guides, from the upper shaft to the lower shaft, thus achieving that the displacement between the chains is uniform and homogeneous throughout its entire length.

In other words, it is the chain guides that which transmits the movement of the pusher supports, generated by the rotation of the spindle, through the skates, to the chains, ensuring that the first and second longitudinal planes defined move in a manner appropriate to the size of the lid to be displaced, maintaining the same distance, in the first transverse direction, throughout the entire path of the two chains. It can be said that the chain guides transmit the displacement in the first transversal to the chains, in either direction.

In one embodiment, the first chain guides and the second chain guides are attached to corresponding bars of the first and second skates by a sliding joint, where the chain guides are configured to be displaced, in the second transverse direction. In this way, said chain guides are allowed to be displaced in the two defined transverse directions, as the skate bars are oriented in the second transverse direction.

The displacement in the first transverse direction of the upper gearwheels, on the upper shaft, can be achieved by means of different elements comprised in the first transverse adjustment mechanism. For example, in one embodiment, the upper gearwheels may be comprised of a pinion-holder support, provided with a flange, so that a self-lubricating friction bushing may be inserted onto the inner diameter of said pinion-holder support, loosely fitted onto the outer diameter of the upper shaft. On the side opposite the collar of the pinion-holder support, a flange can be screwed, so that when both pieces are coupled together, they form a groove on which a pusher bushing is housed. This bushing may be joined to a pin or bolt, and this in turn may be assembled on two arms of the pusher support. When the pusher support is displaced in the first transverse direction, this would cause the displacement of the pusher bushing on the groove of the assembly of parts formed by the pinion-holder support and the flange, causing them to slide axially on the upper shaft. This action involves displacing the gearwheels and the chains, increasing or decreasing the distance between them until the desired measurement is achieved for the lid format to be displaced. As the skates move in solidarity with the pusher support, forming a skate-type carriage, said displacement is translated to the chain guides.

In one embodiment, the first transverse adjustment mechanism further comprises:
- at least one first push clamp joined to a lower end portion of a first chain guide and loosely fitted to the first lower gearwheel; and
- at least one second push clamp joined to a lower end portion of a second chain guide and loosely fitted to the second lower gearwheel.

Preferably, the first transverse adjustment mechanism comprises two pairs of push clamps (two first and two second clamps), each of them being connected to a respective chain guide. Thus, each of the four chain guides comprises a push clamp (first or second) which connects same with a respective lower gearwheel (first or second). When loosely fitted, the push clamps allow normal rotation of said lower gearwheels. In other words, the push clamp groove has a width that is greater than the width of the lower gearwheels.

In this embodiment, the first chain guide and the second chain guide are configured to push, in the first transverse direction, in opposite directions, the first lower gearwheel and the second lower gearwheel, respectively, through said push clamps when said chain guides are displaced by the corresponding skates, and these by the corresponding pusher supports.

In other words, with the movement of the chain guides, the push clamps are displaced and these in turn push the lower gearwheels through, preferably, the wheel hub and linear guides, until they are positioned in the location specified for the new lid size and format to be displaced. Once the gearwheels have been displaced, in the first transverse direction, along the lower shaft to their working position, said transverse position can be locked by means of fixing means, such as bolts.

In one embodiment, the first transverse adjustment mechanism comprises:
- four crankshafts (one for each chain guide), each comprising a bar oriented in a longitudinal direction, parallel to the chain guides, wherein said four crankshafts are arranged in two pairs of two crankshafts, each of said pairs of crankshafts being connected, as indicated below, to a pair formed by a first chain guide and a second chain guide;
- a stability assembly comprising:
   ∘ four guide clamps tightly joined, preferably by tightening, each to each of the chain guides, respectively (i.e. each guide clamp is attached to one chain guide);
   ∘ four connecting rods oriented perpendicularly to the bars of the crankshafts and to the chain guides (i.e., located in a transverse plane), wherein each of said connecting rods is connected, at a first end, to a guide clamp, by means of an articulated joint hinged with respect to a shaft comprising a longitudinal direction, and at a second end, rigidly, to a corresponding crankshaft;
   ∘ two ball joint supports each comprising a bar shape oriented perpendicularly to the bars of the crankshafts, where said ball joint supports comprise a first end connected by means of a hinged articulated joint, with respect to a shaft comprising the longitudinal direction, to a first crankshaft; and a second end connected, also by means of a hinged articulated joint with respect to a shaft comprising the longitudinal direction, to a second crankshaft that pairs up with the first crankshaft; and
   ∘ four tie rods oriented perpendicularly to the bars of the crankshafts and to the chain guides, wherein each tie rod is connected at a first end, to one of the guide clamps, by means of a hinged articulated joint, with respect to a shaft comprising a longitudinal direction, and at a second end, also by means of a hinged articulated joint, with respect to a shaft comprising a longitudinal direction, to an end portion of a ball-joint support;
wherein the four crankshafts are configured to rotate on themselves when the chain guides are displaced in the first transverse direction, due to the displacement of the skates, producing the displacement in the second transverse direction of said chain guides when connected, by means of the corresponding connecting rod and the corresponding tie rod to the corresponding crankshaft, and when connected by means of a sliding connection with the corresponding skate.

With this embodiment it can be seen that, when applying a displacement of the chain guides, in the first transverse direction, due to the rotation of the spindle, a displacement is produced in the second transverse direction. Specifically, a curved displacement is produced that can be broken down into the two transverse directions indicated. Said curved displacement is due to the connection of the chain guides with the four crankshafts, which are not displaced in any direction, but are configured only to rotate on themselves. This is also possible due to the sliding connection of the chain guides with the skates.

In one embodiment, the first transverse adjustment mechanism comprises three stability assemblies, longitudinally distributed, in a section between the upper rotation system and the lower rotation system. In other words, the elements indicated above, the four guide clamps, the four connecting rods, the two ball joint supports and the four tie rods are repeated three times along the adjustable system, so that the displacement of the chain guides is as even as possible.

In one embodiment, the first transverse adjustment mechanism comprises a lower table rigidly fixed to the chassis of the adjustable system and connected, by means of a corresponding hinged articulated joint, with respect to a longitudinal axis, to a lower end portion of each of the four crankshafts. In other words, each of the four crankshafts rests on this lower table, but they can rotate on themselves, with respect thereto, to allow the above-mentioned embodiment.

For this embodiment, the system may comprise two crankshaft supports screwed onto the lower table, which comprise two holes for housing two self-lubricating friction bushings, inside of which the end of the crankshaft can be housed.

In one embodiment, the first transverse adjustment mechanism comprises a flat flange joined to the chassis, by means of a centring support, and connected by means of a corresponding hinged articulated joint, with respect to a longitudinal axis, to an upper end portion of each of the four crankshafts. Preferably, the centring support, joined to the chassis, comprises four slides projected onto four threaded holes in the flat flange, in this way, through the centring support any deviation of the flat flange, and in turn of the crankshafts, can be corrected.

In one embodiment, the first transverse adjustment mechanism comprises four modular pinions, each connected to one end of each of the four crankshafts, arranged so that each of said modular pinions comprises a section that is geared with two other geared sections of two corresponding modular pinions. In this way, the rotations of the four crankshafts are equal, although in two different directions. These modular pinions comprise a gear train that synchronises the rotational movement of the chain guides and the crankshafts, and equips the mechanism with structural stability and rigidity in this area of the oven.

In one embodiment, the adjustable system for displacing lids comprises a drive wheel connected to an actuation element, such as a motor, by means of a drive chain, wherein said drive wheel is configured to transmit a rotational movement to the lower gearwheels.

Preferably, the drive wheel is located on the lower shaft, so that the movement of the chains is transmitted through the lower gearwheels.

### BRIEF DESCRIPTION OF THE DRAWINGS

To complete the description, and for the purpose of helping to make the features of the invention more readily understandable, this specification is accompanied by a set of drawings constituting an integral part of the same, wherein by way of illustration and not limitation the following has been represented:
- Figure 1 represents a general perspective view of the adjustable system for displacing multi-format lids, where the components of said system, as well as their arrangement, can be seen from a general perspective.
- Figure 2 shows a detailed view, in perspective, of a lid housed between the buckets of the two chains and two guides, of the lid guiding structure, on the lower table of the system, which comprises openings passing through the chain guides and is joined in an articulated manner to the crankshafts.
- Figure 3 represents a perspective view of the upper rotation system, of the drive mechanism, comprising a first upper gearwheel and a second upper gearwheel, oriented in parallel, separated by a length, in a first transverse direction, both geared by their respective chains, and mounted on the upper shaft.
- Figure 4 shows an upper perspective view of the upper rotation system, where the components of the first transverse adjustment mechanism configured to modify the separation length between the first upper gearwheel and the second upper gearwheel can be seen, as well as the elements that connect the spindle with the chain guides.
- Figure 5 represents a cross-sectional view of the upper rotation system comprising the first upper gearwheel and the second upper gearwheel, oriented in parallel, being separated by a length, in the first transverse direction.
- Figure 6 shows a lateral perspective view of the lower rotation system, where the components that allow the lower gearwheels to be displaced relative to the lower shaft can be seen.
- Figure 7 represents a cross-sectional view of the lower rotation system, where the lower gearwheels, the lower shaft, the drive wheel, and the components that facilitate the displacement between the lower gearwheels can be seen.
- Figure 8 shows a perspective view of components of the first transverse adjustment mechanism, specifically the four crankshafts as well as a stability assembly, located in a central portion of the adjustable system.
- Figure 9 represents a perspective view of the quick format change system for regulating the bucket chain with the main elements involved in the lower area of the oven.
- Figure 10 shows a perspective view of components of the first transverse adjustment mechanism, specifically, the flat flange joined to the chassis, by means of a centring support, and connected by means of a corresponding hinged articulated joint, to an upper end portion of each of the four crankshafts, as well as four modular pinions connected to the four crankshafts, arranged so that each of said modular pinions comprises a section geared with two other geared sections of two corresponding modular pinions.
- Figure 11 represents a perspective view of the lid guiding structure comprising four guides oriented in the same longitudinal direction, as well as the second transverse adjustment mechanism configured to modify the separation distance, in the second transverse direction, between the first two guides and between the second two guides.
- Figure 12 shows a perspective view of an upper end portion of the guides, as well as the components that allow the articulated connection in said upper end portion with respect to the chassis.

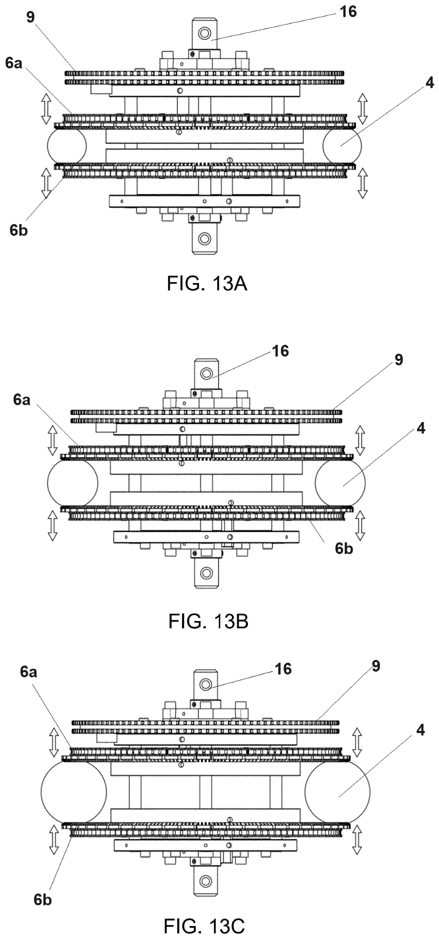

- Figures 13A-13C represent a sequence of plan views of the lower rotation system, of the adjustable system for displacing lids, the lower gearwheels being positioned for different lid formats or sizes: small, medium and large, respectively.
- Figures 14A-14C represent a sequence of plan views of the upper rotation system, of the adjustable system for displacing lids, the upper gearwheels being positioned for different lid formats or sizes: small, medium and large, respectively.
- Figures 15A-15C represent a sequence of plan views of the second transverse adjustment mechanism configured to modify the separation distance, in the second transverse direction, between the first two guides and between the second two guides.

List of elements shown in the figures:
1st.- First chain
1b.- Second chain
2.1.- First guide
2.2.- Second guide
3.- Spindle
4.- Lids
5th - First upper gearwheel
5b.- Second upper gearwheel
6th - First lower gearwheel
6b.- Second lower gearwheel
7.- Buckets
8.- Bracket support
9.- Drive wheel
10.- Chassis
11.- Actuation element
12a.- First skate
12b.- Second skate
13.- Drive chain
14a.- First pusher support
14b.- Second pusher support
15.- Upper shaft
16.- Lower shaft
17a.- First chain guide
17b.- Second chain guide
22.- Wheel hub
28a.- First push clamp
28b.- Second push clamp
30.- Guide clamps
31.- Connecting rods
36a.- First crankshaft
36b.- Second crankshaft
37.- Ball joint holders
38.- Crankshaft supports
39.- Tie rods
40.- Lower table
42.- Flat flange
44a, 44b.- Modular pinions
45.- Arm-rod shaft
46.- First lay shaft
47.- Second lay shafts
48.- Guide rods
49.- Tie rod bar

### PREFERRED EMBODIMENT OF THE INVENTION

As can be seen in the figures, the present invention consists of an adjustable system for displacing multi-format lids. Specifically, a system for displacing lids (4), in a longitudinal, vertical direction, both in the upward and downward direction, to be preferably used in a vertical oven, with the aim of drying the varnish or other surface coating applied to lids of containers, by means of the drying means disclosed in the background. In other words, the adjustable system can be considered a device or mechanism for displacing lids (4) of different sizes and shapes, which require a format change.

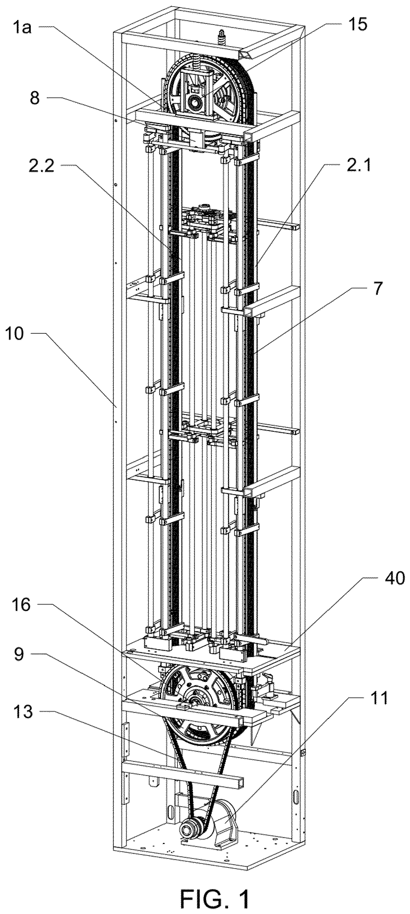

Figure 1 shows a perspective view of the complete adjustable system, in which the chassis (10) of said system can be seen, as well as the position relationship between the upper rotation system, which comprises a first upper gearwheel (5a) and a second upper gearwheel (5b), and the lower rotation system which comprises a first lower gearwheel (6a) and a second lower gearwheel (6b), as well as the first chain (1a) and the second chain (1b), both with buckets (7), which communicate said upper and lower rotation systems. As can be seen, the displacement performed by the lids (4), in the preferred system, is vertical, the upper gearwheels (5a, 5b) being at a higher height than the lower gearwheels (6a, 6b).

Said figure 1 also shows the actuation system for the rotation movement of the rotation systems, of the adjustable system, which comprises an actuation element (11), which can be an electric motor, located in a lower portion of the chassis (10), fixed thereto by means of a metal plate, connected, by means of a drive chain (13), to a drive wheel (9) located or mounted on the lower shaft (16) of the lower rotation system. Said drive wheel (9) is that which transmits the rotation movement of the actuation element (11) to the lower gearwheels (6a, 6b), through the lower shaft (16), which transmit same to the upper gearwheels (5a, 5b), by means of the first chain (1a) and the second chain (1b).

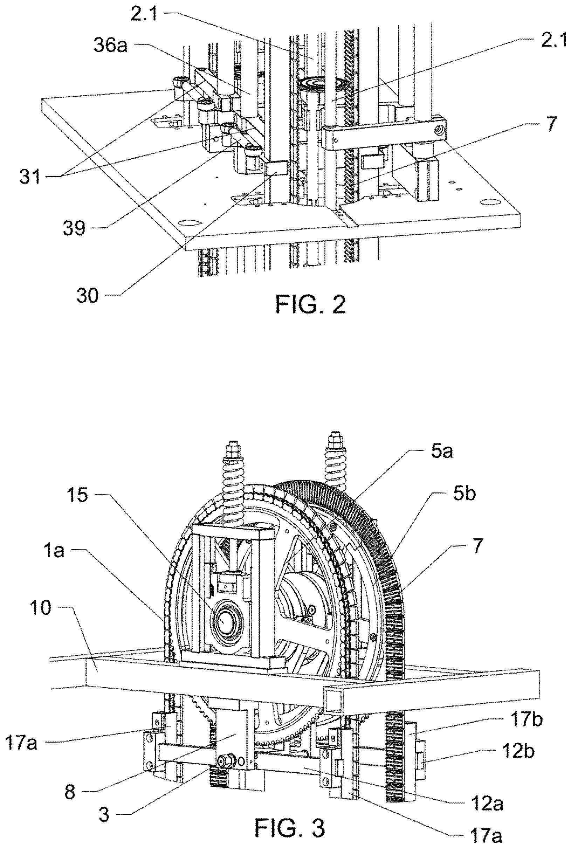

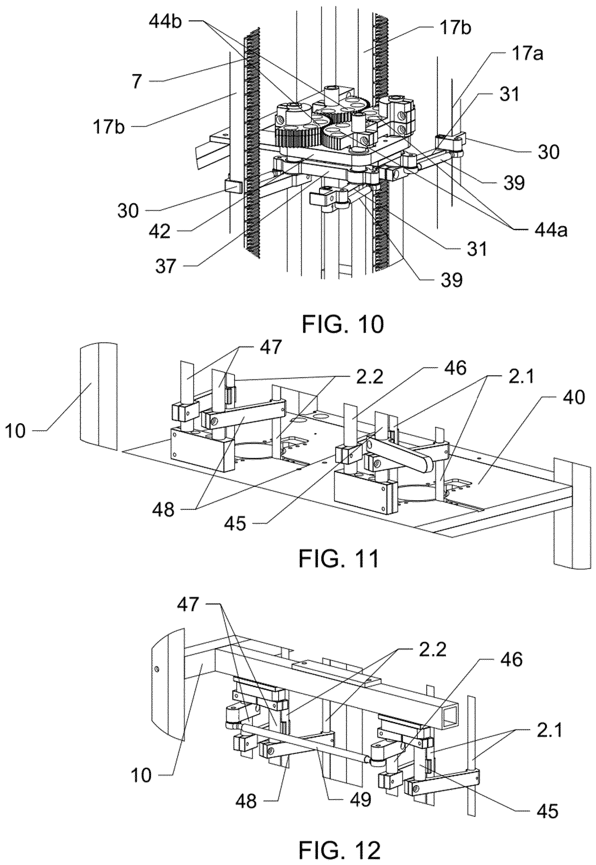

Figure 2 shows a detailed view of how a lid (4) is fastened between two buckets (7), one of the first chain (1a) and another of the second chain (1b), and it can be interpreted that it can be displaced, in the longitudinal direction, from the displacement of the chains, generated by the rotation of the lower gearwheels (6a, 6b), due to their connection with the actuation element (11). From this figure, it can be interpreted how the first and second chains (1a, 1b) can displace a plurality of lids (4) from their fastening point to the buckets (7). Likewise, it can be seen, in this figure 2, that the adjustable system comprises a lid guiding structure (4), which guides said lids (4) in their displacement and prevents them from deviating from the longitudinal trajectory, when they are moved by the buckets (7). Said structure comprises two first guides (2.1) oriented in a longitudinal direction, to guide the displacement in one direction, such as the upward direction, and two second guides (2.2), with the same orientation, to guide the displacement in the opposite direction, such as the downward direction, depending on the direction of rotation of the actuation element (11) which affects the direction of rotation of the gearwheels (5a, 5b, 6a, 6b) of the adjustable system. These first and second guides (2.1, 2.2) are also shown in figures 11, 12 and 15A-15C, in which their use can be interpreted.

The peculiarity of this adjustable displacement system for lids (4), with respect to those disclosed in the background, is that this system comprises a first transverse adjustment mechanism configured to modify the separation length between the first gearwheels (5a, 6a) and the second gearwheels (5b, 6b), as well as between the first chain (1a) and the second chain (1b), within a range comprising a first end having a greater length and a second end having a shorter length. This feature allows the separation distance between the buckets (7) to be adapted depending on the size or format of the lid (4) to be displaced. In other words, moving said buckets (7) closer or further away from the corresponding first chain (1a) and from the second chain (1b).

To do this, the first chain (1a), the first upper gearwheel (5a) and the first lower gearwheel (6a) are always in the same first longitudinal plane, while the second chain (1b), the second upper gearwheel (5b) and the second lower gearwheel (6b) are always in the same second longitudinal plane. Said longitudinal planes are mobile in the first transverse direction, which is the axial direction of the upper and lower shaft (15, 16) of the upper and lower gearwheels (5a, 5b, 6a, 6b), but in opposite directions. In other words, said assemblies of first elements (wheels and chain) and second elements (wheels and chain) can be brought closer together or moved further apart between two ends. One having a greater length and one having a shorter length.

Likewise, the adjustable system also comprises a second transverse adjustment mechanism configured to modify the separation distance, in the second transverse direction, between the first two guides (2.1) and between the second two guides (2.2), wherein said separation distance is variable within a range comprising a first end having a greater width and a second end having a smaller width. In other words, not only can the measurement be regulated along the length (in a first transverse direction) but also along the width (second transverse direction) of the longitudinal displacement of the lids, in order to be able to displace different formats.

First, the first transverse adjustment mechanism is described below, as well as the components it comprises.

Figures 3, 4 and 5 show some of the components of the first transverse adjustment mechanism, especially those that regulate said mechanism, which are located close to the upper rotation system, configured to modify this separation length between the first gearwheels (5a, 6a) and the second gearwheels (5b, 6b), as well as the first chain (1a) and the second chain (1b) in a first transverse direction.

For example, figure 3 shows that the two upper gearwheels (5a, 5b) are identical, they are mounted on the same upper shaft (15), and are arranged facing each other, each one geared with a corresponding chain (1a, 1b), provided with buckets (7) attached to the links of said chains (1a, 1b). This upper shaft (15) is mounted on a chassis (10), which remains fixed during the operation or displacement operation of the adjustable system, as well as during the regulation or adjustment of the system to adapt to different lid (4) sizes and formats.

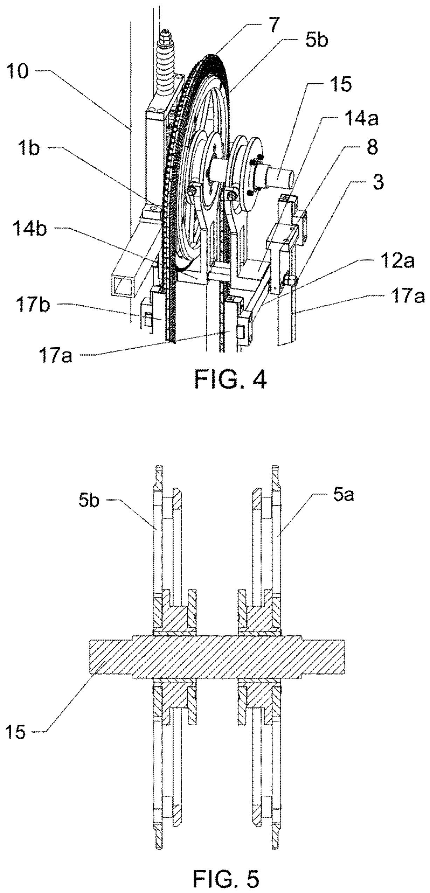

The same figure 3 shows a spindle (3), joined, by means of a nut, to two facing bracket supports (8), which form part of the chassis (10), in other words, they do not move or rotate. Said spindle (3) is also joined by means of a threaded connection to a first pusher support (14a) and to a second pusher support (14b), which can be seen in figure 4.

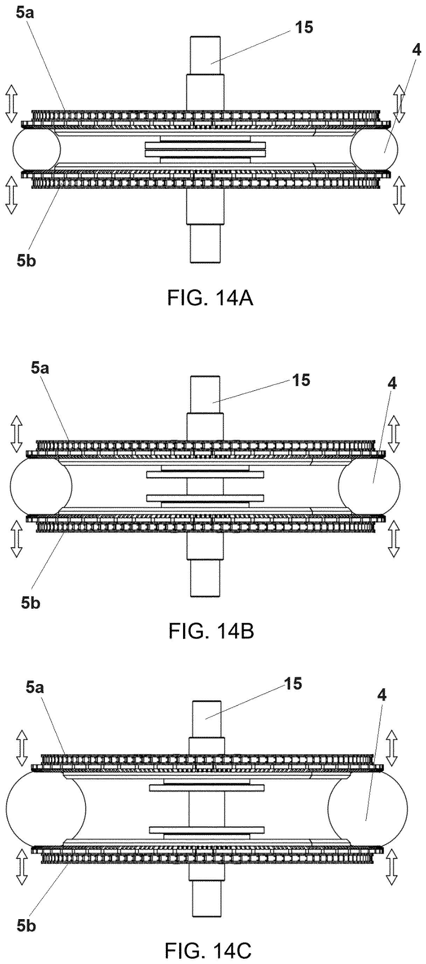

The operation of the first transverse adjustment mechanism consists in rotating the spindle (3), on itself, so that said rotation, which is a floating rotation with respect to the chassis (10), produces the displacement of the pusher supports (14a, 14b), in the first transverse direction, each of them, in an opposite direction, due to opposite threads in the same spindle (3). In other words, they can be moved away to a first end having a greater length, as can be seen in figure 14C, to displace large-sized lids, or brought closer to a second end having a shorter length, as shown in figure 14a, to move small-sized lids (4), passing through infinite intermediate states, such as the one shown in figure 14B, to displace medium-sized lids (4).

The first and second pusher supports (14a, 14b) are the elements that push the first and second upper gearwheels (5a, 5b) in the first transverse direction, in opposite directions, but without said pushes affecting the rotation, with respect to the upper shaft (15), of said upper gearwheels (5a, 5b). For this purpose, said first and second pusher supports (14a, 14b) comprise a bracket shape with an upper end comprising two connected arms, both connected to a corresponding upper gearwheel (5a, 5b), by means of a pusher bushing and a corresponding screw, shaft or pin, which allows said fixing.

As can be seen in figure 5, for the displacement in the first transverse direction to occur, preferably, the upper gearwheels (5a, 5b) may be comprised of a pinion-holder support, provided with a collar, so that, a self-lubricated friction bushing may be inserted onto the inner diameter of said pinion-holder support, loosely fitted onto the outer diameter of the upper shaft (15). On the side opposite the collar of the pinion-holder support, a flange can be screwed, so that when both pieces are coupled together, they form a groove on which the pusher bushings that are joined to the first and second pusher supports (14a, 14b) are housed.

Figures 3 and 4 also show that the first transverse adjustment mechanism also comprises a first skate (12a) joined to the first pusher support (14a), and a second skate (12b) joined to the second pusher support (14b). Said skates (12a, 12b) are displaced in the first transverse direction, in the same way as the pusher supports (14a, 14b), due to the rotation of the spindle (3). These skates (12a, 12b) each comprise a straight bar, oriented in the second transverse direction, perpendicular to the longitudinal direction and to the first transverse direction. At each end of these skates (12a, 12b) a corresponding chain guide (17a, 17b) is joined by means of a connection that is displaceable in the second longitudinal direction.

More specifically, the first skate (12a) is joined by its two corresponding end portions to a first chain guide (17a), the mechanism thus comprising two first chain guides (17a). The same occurs with the second skate (12b), which is connected by its two corresponding end portions to a second chain guide (17b), the mechanism comprising two second chain guides (17b).

Each first chain guide (17a) and each second chain guide (17b) comprises a straight bar or rod, oriented in the longitudinal direction, having a longitudinal cavity housing links of the first chain (1a) and of the second chain (1b), correspondingly, which are also aligned, in the longitudinal direction, in one of two trajectories connecting the upper gearwheels (5a, 5b) with the lower gearwheels (6a, 6b), through said first chain (1a) and second chain (2a).

As the four chain guides (17a, 17b) (two first and two second) are joined to the corresponding skates (12a, 12b) by means of a movable (sliding) joint in the second longitudinal direction, when the skates (12a, 12b) are displaced in the first transverse direction, due to the effect of the spindle (3) rotation, they push the four chain guides (17a, 17b) in the same direction and way, moving away or coming closer, pushing the corresponding first chain (1a) and second chain (1b), maintaining the same separation distance between the buckets (7) of said corresponding first chain (1a) and second chain (1b), during their longitudinal displacement.

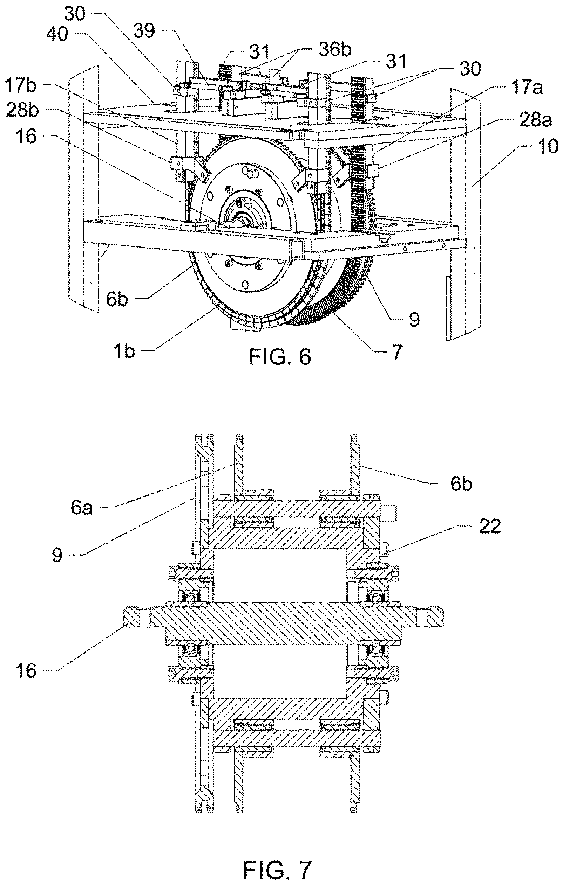

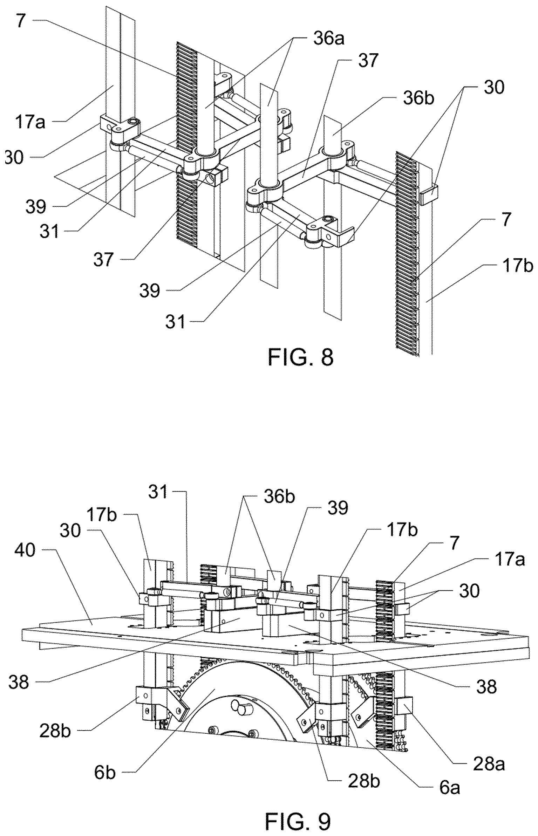

This displacement, in the first transverse direction, of the skates (12a, 12b) is also communicated to the lower gearwheels (6a, 6b) by means of push clamps (28a, 28b). Each first chain guide (17a) is rigidly connected by a lower end portion to a first push clamp (28a), so that if there are two first chain guides (17a) there are two first push clamps (28a). The same applies to each second chain guide (17b) which is rigidly joined by a lower end portion to a second push clamp (28b). These push clamps (28a, 28b) each comprise a slot loosely fitted to a corresponding lower gearwheel (6a, 6b). Therefore, the first push clamps (28a) are fitted to the first lower gearwheel (6a) and the second push clamps (28b) are fitted to the second lower gearwheel (6b), as can be seen in figures 6 and 9. In this way, the chain guides (17a, 17b) allow the joint displacement of the longitudinal planes defined by the first gearwheels (5a, 6a) and the first chain (1a); as well as the second gearwheels (5b, 6b) together with the second chain (1b), depending on the size of the lid (4) to be displaced.

In order to allow the displacement of the lower gearwheels (6a, 6b) relative to the lower shaft (16), the adjustable system comprises a wheel hub (22), shown in Figure 7, mounted on the lower shaft (16), both the first lower gearwheel (6a) and the second lower gearwheel (6b) being mounted, in a floating manner, on said wheel hub (22). Likewise, the drive wheel (9) is also mounted on said wheel hub (22), this being the way in which the rotation of said drive wheel (9) is translated to the lower gearwheels (6a, 6b). Obviously, in order for the wheel hub (22) to rotate in solidarity with the drive wheel (9) and the lower gearwheels (6a, 6b), allowing the displacement in the first transverse direction thereof, said wheel hub (22) may comprise pins, flanges, or stops that allow said functions, as well as elements that limit the displacement in the first transverse direction of the lower gearwheels (6a, 6b). In other words, locking means that prevent a transverse displacement of the lower gearwheels (6a, 6b) when this is not desired.

Figures 6, 8 and 9 show that the first transverse adjustment mechanism also comprises four crankshafts (36a, 36b). Two first crankshafts (36a) and two second crankshafts (36b), each of which comprises a bar oriented in a longitudinal direction, parallel to the chain guides (17a, 17b). These four crankshafts (36a, 36b) are arranged in two pairs of two crankshafts (36a, 36b), each of said pairs of crankshafts (36a, 36b) being connected to a pair formed by a first chain guide (17a) and a second chain guide (17b). In other words, as seen in figure 8, from a front perspective, and in figure 9, from a rear perspective.

The connection between each of the pairs of crankshafts (36a, 36b) with the first chain guide (17a) and the second chain guide (17b) is determined by a stability assembly that can be easily seen in figure 8. Said assembly comprises four guide clamps (30) each tightly attached to one of the chain guides (17a, 17b).

Likewise, the stability assembly also comprises four connecting rods (31) connected, at a first end, to a guide clamp (30), by means of an articulated joint hinged with respect to a shaft comprising a longitudinal direction, and at a second end, and rigidly, to a corresponding crankshaft (36a, 36b).

Moreover, the stability assembly comprises two ball-joint supports (37) each comprising a bar shape oriented perpendicularly to the bars of the crankshafts (36a, 36b), wherein said ball-joint supports (37) comprise a first end connected by means of a hinged articulated joint, with respect to a shaft comprising the longitudinal direction, to a first crankshaft (36a); and a second end connected, also by means of a hinged articulated joint with respect to a shaft comprising the longitudinal direction, to a second crankshaft (36b) that forms a pair with the first crankshaft (36a).

The fourth element present in the stability assembly is four tie rods (39) each connected at a first end to one of the guide clamps (30) by means of a hinged articulated joint, with respect to a shaft comprising a longitudinal direction, and at a second end, also by means of a hinged articulated joint, with respect to a shaft comprising a longitudinal direction, to an end portion of a ball joint support (37).

These four elements, in each assembly, allow the displacement of the chain guides (17a, 17b) to remain even from both ends. In other words, from their connection to the skates (12a, 12b) to the lower gearwheels (6a, 6b), maintaining the distance between the buckets (7) of the respective first chain (1a) and second chain (1b).

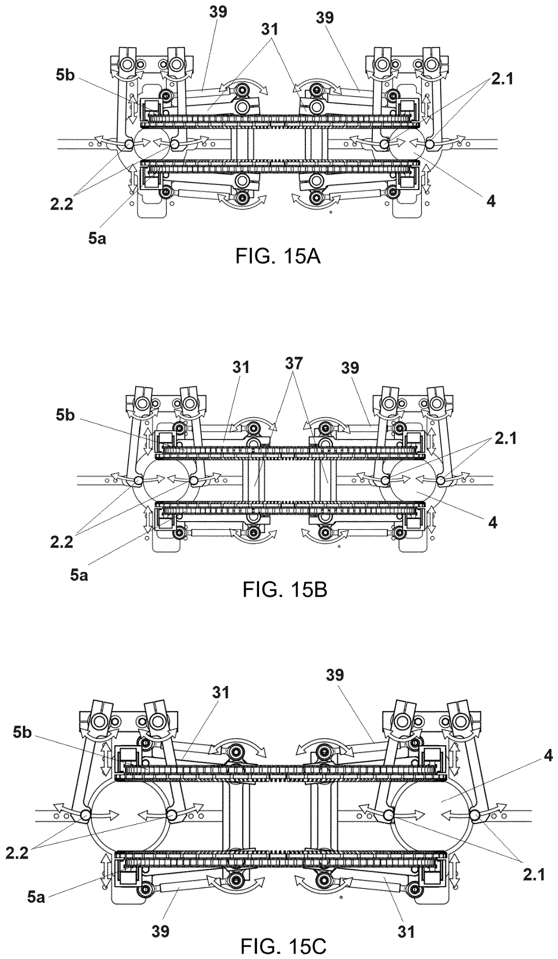

For this purpose, the four crankshafts (36a, 36b) are configured to rotate on themselves, in the longitudinal direction, without moving from their position, when the chain guides (17a, 17b) are displaced in the first transverse direction, due to the displacement of the skates (12a, 12b), producing the displacement in the second transverse direction of said chain guides (17a, 17b) when connected, by means of the corresponding connecting rod (31) and the corresponding tie rod (39), to the corresponding crankshaft (36a, 36b), and when connected by means of a sliding connection with the corresponding skate (12a, 12b). In other words, when the displacement occurs in the first transverse direction, both the tie rods (39) and the connecting rods (31) pull the chain guides (17a, 17b), producing a displacement in the second transverse direction thereof. In other words, as if it were a curved displacement. This displacement can be seen in the sequence of figures 15A-15C.

In order to maintain adequate stability, the first transverse adjustment mechanism comprises three stability assemblies, distributed longitudinally, in a section between the upper rotation system and the lower rotation system, as can be seen in figure 1. Two of said assemblies are located at the upper and lower end portions of the crankshafts (36a, 36b), and the third one is located in a middle part of said crankshafts (36a, 36b).

Figures 1 and 11 show that the adjustable system also comprises a lower table (40) rigidly fixed to the chassis (10) of the adjustable system and connected by means of a corresponding hinged articulated joint, with respect to a longitudinal axis, to a lower end portion of each of the four crankshafts (36a, 36b). Specifically, said four crankshafts (36a, 36b) are fixed by means of crankshaft supports (38) that are supported and fixed to the lower table (40) and which comprise bearings or rollers necessary to facilitate the rotation, on themselves, of the four crankshafts (36a, 36b).

Moreover, figure 10 shows that the adjustable system comprises a flat flange (42) joined to the chassis (10), by means of a centring support (43), and connected by means of a corresponding hinged articulated joint, with respect to a longitudinal axis, to an upper end portion of each of the four crankshafts (36a, 36b). In fact, said figure shows four modular pinions (44a, 44b) each connected to one end of each of the four crankshafts (36a, 36b), arranged such that each of said modular pinions (44a, 44b) comprises a section geared with two other geared sections of two corresponding modular pinions (44a, 44b). Using said figure 10, it is possible to interpret the operation and movement of these four crankshafts (36a, 36b). The centring support (43), which can barely be seen in figure 10, allows adjusting the possible deviations of the four crankshafts (36a, 36b), which may occur due to normal use of the adjustable system.

Once the first transverse adjustment mechanism has been described, it is also necessary to describe the second transverse adjustment mechanism, defined above, configured to modify the separation distance, in the second transverse direction, between the first two guides (2.1) and between the second two guides (2.2), which can be seen in figures 2, 11 and 12. As with the chain guides (17a, 17b), said separation distance is variable within a range comprising a first end having a greater width and a second end having a narrower width, as can be seen in figures 15A-15C.

The second transverse adjustment mechanism comprises a drive shaft called the arm-rod shaft (45), which consists of a straight rod, oriented in the longitudinal direction, fixed to the chassis (10), in an articulated manner hinged with respect to the longitudinal axis that defines said straight rod. In addition to the arm-rod shaft (45), the second transverse adjustment mechanism comprises a first lay shaft (46), parallel to the arm-rod shaft (45), connected to said arm-rod shaft by means of a geared system, located in an upper end portion of both shafts, visible in figure 12, such that the rotation, with respect to the longitudinal axis, of the arm-rod shaft (45) produces the same rotation of the lay shaft (46), in the opposite direction.

Moreover, the second transverse adjustment mechanism also comprises two second lay shafts (47), parallel to the arm-rod shaft (45), and to the first lay shaft (46), connected to each other by means of a geared system similar to that of the arm-rod shaft (45) and the first lay shaft (46).

At the lower end portion, the arm-rod shaft (45) is joined to the lower table (40) by means of the same crankshaft support (38) that supported the crankshafts (36a, 36b), as well as the two second lay shafts (47), and the first lay shaft (46).

In order to link the defined shafts (45, 46, 47) of the second transverse adjustment mechanism to the first and second guides (2.1, 2.2), the second transverse adjustment mechanism comprises guide rods (48), oriented in a transverse plane.

Each assembly of these guide rods (48) comprises a guide rod (48) rigidly joined, at a first end, to the arm-rod shaft (45) and to a first guide (2.1), also rigidly. Another guide rod (48) is joined, in the same manner, to the first lay shaft (46) and to the other first guide (2.1). The third of these guide rods (48) is joined, in the same manner, to one of the two second lay shafts (47) and to a second guide (2.2), while the fourth of these guide rods (48) is joined, in the same manner, to the other of the two second lay shafts (47) and to the other second guide (2.2). As can be seen in figure 1, the adjustable system may comprise several sets of guide rods (48) as defined.

Figure 12 shows a tie rod bar (49), arranged in a transverse direction, configured to transmit the rotation of the arm-rod shaft (45) to one of the two second lay shafts (47). In this way, the rotation applied to the arm-rod shaft (45) can be transmitted to the two second lay shafts (47), in the indicated directions.

When the arm-rod shaft (45) rotates on itself, respective rotations of the first lay shaft (46) (also on itself, in the longitudinal direction, but in the opposite direction) and of the two second lay shafts (47) (each in a different direction) occur. These rotations produce translations in the second transverse direction of the first (2.1) and second guides (2.2), said translations being the way they have to modify their width according to the size, width-wise, of the lid (4) to be moved. In fact, with the mechanism described, there is not only a displacement in the second transverse direction, but also in the first transverse direction, by generating a curved displacement, due to the joint between the guide rods (48) and the first guides (2.1) and second guides (2.2).

For the purposes of this text, it should be understood that when referring in plural to elements that comprise a first and a second element, both are being mentioned. For example, when "upper gearwheels" are mentioned, the first (5a) and second upper gearwheels (5b) are mentioned.

Format change is a task that is increasingly required for machines as a result of a continuous evolution of the market where there is a greater tendency towards the production of smaller and more varied batches that are demanded by customers. To meet this need, machines must be provided with greater flexibility and versatility in production. With the implementation of the adjustable system, an additional plus is provided to the equipment that entails important competitive advantages that position it advantageously in the market, such as:
- Very significant savings with the implementation of the quick format change system in production times and costs: it leads to an increase in the profitability of the machine as a direct consequence of the reduction in machine downtime and set-up times, with a reduction in times compared to manual format change of approximately 90% to 95%.
- Increased efficiency in the production line: speed, safety, precision and consequently increased overall profitability.
- Increased safety on the machine during the execution of the quick format change since human intervention is considerably reduced in time and therefore the risk to the operator is significantly reduced.
- Elimination of specific parts and tools for performing the format change for each lid type. With the quick format change system, additional parts associated with each lid format that were necessary in the installation of manual format changes are discarded. With this action, the replacement of this type of parts is avoided and possible errors are eliminated, such as ensuring that the interchangeable part is the correct one and that it is installed in the correct position in the machine.
- By incorporating new, lighter and more resistant materials in the design of the components of the quick format change system, weights, loads, friction forces, wear, etc. are reduced, so the frequency of maintenance of the entire mechanical device described here is considerably reduced.
- Effortless adjustments and greater precision in the execution of quick format change compared to manual format change, also requires less specific training of the operator as this process is substantially automated on the machine, so the availability of operators with experience in this type of tasks is not required.

## Claims

1. An adjustable system for displacing multi-format lids (4), wherein said adjustable system comprises a drive mechanism comprising:
- an upper rotation system comprising a first upper gearwheel (5a) and a second upper gearwheel (5b), oriented in parallel, being separated by a length, in a first transverse direction;
- a lower rotation system comprising a first lower gearwheel (6a) and a second lower gearwheel (6b), also oriented in parallel, being separated by a length, in the first transverse direction;
- a first chain (1a) geared to the first upper gearwheel (5a) and to the first lower gearwheel (6a);
- a second chain (1b) geared to the second upper gearwheel (5b) and to the second lower gearwheel (6b);
- a chassis (10) on which the rotation systems are mounted;
wherein the upper gearwheel (5a) and the first lower gearwheel (6a) are located in the same first longitudinal plane; wherein the second upper gearwheel (5b) and the second lower gearwheel (6b) are located in the same second longitudinal plane;
wherein the first chain (1a) and the second chain (1b) transmit the rotation between the gearwheels (5a, 5b, 6a, 6b) of the upper rotation system and the lower rotation system; wherein the first chain (1a) and the second chain (1b) each comprise lid fastening means (4) configured to hold, between them, the lids (4) during the displacement thereof;
wherein the adjustable system is **characterised in that** it comprises a first transverse adjustment mechanism configured to modify the separation length between the first gearwheels (5a, 6a) and the second gearwheels (5b, 6b), as well as between the first chain (1a) and the second chain (1b), within a range comprising a first end having a greater length and a second end having a shorter length.

2. The adjustable system for displacing lids (4), according to claim 1, comprising a lid (4) guiding structure, comprising at least one guide (2.1, 2.2) arranged in a longitudinal direction, configured to guide the displacement, in said longitudinal direction, of the lids (4), between the upper rotation system and the lower rotation system, said lids (4) being fastened by means of the fastening means, to the chains (1a, 1b).

3. The adjustable system for displacing lids (4), according to the preceding claim, wherein the lid (4) guiding structure comprises four guides (2.1, 2.2), all of them oriented in the same longitudinal direction, wherein two first guides (2.1) are separated by a distance measured in a second transverse direction and are configured to guide the lids (4) in a first direction of the longitudinal direction, when said lids (4) slide between said two first guides (2.1); and wherein two second guides (2.2) are separated by another same distance in the second transverse direction, and are configured to guide the lids (4) in an inverse direction of the two first guides (2.1), in the same longitudinal direction, when said lids (4) slide between said two second guides (2.2).

4. The adjustable system for displacing lids (4), according to the preceding claim, wherein the lid (4) guiding structure can be articulated and comprises a second transverse adjustment mechanism configured to modify the separation distance, in the second transverse direction, between the first two guides (2.1) and between the second two guides (2.2); wherein said separation distance is variable within a range comprising a first end having a greater width and a second end having a smaller width.

5. The adjustable system for displacing lids (4), according to any of the preceding claims, wherein the lid (4) fastening means, comprised in the first chain (1a) and in the second chain (1b), comprise a plurality of buckets (7), wherein each bucket (7) is joined to at least one link of a chain (1a, 1b), wherein a lid (4) is configured to be fastened, during its displacement, in a trajectory determined by the chains (1a, 1b), by at least one bucket (7), joined to the first chain (1a), and a bucket (7) joined to the second chain (1b).

6. The adjustable system for displacing lids (4), according to any of the preceding claims, comprising an upper shaft (15) on which the two upper gearwheels (5a, 5b) are mounted and a lower shaft (16) on which the two lower gearwheels (6a, 6b) are mounted.

7. The adjustable system for displacing lids (4), according to claim 6; comprising a wheel hub (22) mounted on the lower shaft (16); wherein the first lower gearwheel (6a) and a second lower gearwheel (6b) are mounted, in a floating manner, on the wheel hub (22), said lower gearwheels (6a, 6b) being configured to be displaced in the first transverse direction, on said wheel hub (22), between the first end having a greater length and the second end having a shorter length.

8. The adjustable system for displacing lids (4), according to any of the preceding claims, wherein the first transverse adjustment mechanism comprises:
- a spindle (3), mounted on at least one bracket support (8) that is affixed to the chassis (10), wherein said spindle (3) is configured to rotate on itself, and is oriented in the first transverse direction;
- a first pusher support (14a) connected to the spindle (3) by means of a threaded joint, wherein said pusher support (14a) is displaceable in the first transverse direction when said spindle (3) rotates on itself;
wherein the pusher support (14a) is configured to push and displace the first upper gearwheel (5a) in the first transverse direction when said pusher support (14a) is displaced.

9. The adjustable system for displacing lids (4), according to the preceding claim, wherein the first transverse adjustment mechanism comprises:
- two facing pusher supports (14a, 14b), connected to the spindle (3) by means of a corresponding threaded joint, wherein both pusher supports (14a, 14b) are displaceable in the first transverse direction, in opposite directions, when said spindle (3) rotates on itself;
wherein each pusher support (14a, 14b) is configured to push and displace a corresponding upper gearwheel (5a, 5b), in the first transverse direction, in opposite directions, when said pusher supports (14a, 14b) are displaced.

10. The adjustable system for displacing lids (4), according to any of the preceding claims, comprising at least two first chain guides (17a) oriented in a longitudinal direction, wherein each first chain guide (17a) comprises a longitudinal cavity housing links of the first chain (1a) that are aligned in the longitudinal direction, in one of two trajectories connecting the first upper gearwheel (5a) with the first lower gearwheel (6a), through said first chain (1a).

11. The adjustable system for displacing lids (4), according to the preceding claim, comprising two second chain guides (17b) oriented in a longitudinal direction, parallel to the first chain guides (17a), wherein each second chain guide (17b) comprises a longitudinal cavity that houses links of the second chain (1b) that are aligned in the longitudinal direction, in one of two trajectories that connect the second upper gearwheel (5b) with the second lower gearwheel (6b), through said second chain (1b).

12. The adjustable system for displacing lids (4), according to claims 8 and 10, wherein the first transverse adjustment mechanism further comprises:
- a first skate (12a), connected to the first pusher support (14a), configured to be displaced in the first transverse direction when the spindle (3) rotates in an integral manner with the first pusher support (14a); and wherein said first skate (12a) comprises a straight bar oriented in a second transverse direction;
wherein each first chain guide (17a) is joined, by an upper end portion, to an end portion of the bar of the first skate (12a) respectively.

13. The adjustable system for displacing lids (4), according to claims 9, 11 and 12, wherein the first transverse adjustment mechanism further comprises:
- a second skate (12b) connected to the second pusher support (14b), wherein said second skate (12b) is configured to be displaced in the first transverse direction when said spindle (3) rotates on itself, in the opposite direction to that of the first skate (12a); and wherein said second skate (12b) comprises a straight bar oriented in a second transverse direction, parallel to the straight bar of the first skate (12a);
wherein each second chain guide (17b) is joined, by an upper end portion, to an end portion of the bar of the second skate (12b) respectively.

14. The adjustable system for displacing lids (4), according to the preceding claim; wherein the first chain guides (17a) and the second chain guides (17b) are joined to the corresponding bars of the first and second skate (12a, 12b) by means of a sliding joint, wherein the chain guides (17a, 17b) are configured to be displaced in the second transverse direction.

15. The adjustable system for displacing lids (4), according to any of claims 13 or 14, wherein the first transverse adjustment mechanism further comprises:
- at least one first push clamp (28a) joined to a lower end portion of a first chain guide (17a) and loosely fitted to the first lower gearwheel (6a); and
- at least one second push clamp (28b) joined to a lower end portion of a second chain guide (17b) and loosely fitted to the second lower gearwheel (6b);
wherein the first chain guide (17a) and the second chain guide (17b) are configured to push, in the first transverse direction, in opposite directions, the first lower gearwheel (6a) and the second lower gearwheel (6b), respectively, through said push clamps (28a, 28b) when said chain guides (17a, 17b) are displaced by the corresponding skates (12a, 12b).

16. The adjustable system for displacing lids (4), according to claim 14 or claims 14 and 15, wherein the first transverse adjustment mechanism comprises:
- four crankshafts (36a, 36b), each comprising a bar oriented in a longitudinal direction, parallel to the chain guides (17a, 17b), wherein said four crankshafts (36a, 36b) are arranged in two pairs of two crankshafts (36a, 36b), each of said pairs of crankshafts (36a, 36b) being connected to a pair formed by a first chain guide (17a) and a second chain guide (17b);
- a stability assembly comprising:
∘ four guide clamps (30) each tightly joined to each of the chain guides (17a, 17b);
∘ four connecting rods (31) oriented perpendicularly to the bars of the crankshafts (36a, 36b) and to the chain guides (17a, 17b), wherein each of said connecting rods (31) is connected, at a first end, to a guide clamp (30), by means of an articulated joint hinged with respect to a shaft comprising a longitudinal direction, and at a second end, rigidly, to a corresponding crankshaft (36a, 36b);
∘ two ball-joint supports (37) each comprising a bar shape oriented perpendicularly to the bars of the crankshafts (36a, 36b), wherein said ball-joint supports (37) comprise a first end connected by means of a hinged articulated joint, with respect to a shaft comprising the longitudinal direction, to a first crankshaft (36a); and a second end connected, also by means of a hinged articulated joint with respect to a shaft comprising the longitudinal direction, to a second crankshaft (36b) that is paired with the first crankshaft (36a);
∘ four tie rods (39) oriented perpendicularly to the bars of the crankshafts (36a, 36b) and to the chain guides (17a, 17b), wherein each tie rod (39) is connected at a first end, to one of the guide clamps (30), by means of a hinged articulated joint, with respect to a shaft comprising a longitudinal direction, and at a second end, also by means of a hinged articulated joint, with respect to a shaft comprising a longitudinal direction, to an end portion of a ball joint support (37);
wherein the four crankshafts (36a, 36b) are configured to rotate on themselves when the chain guides (17a, 17b) are displaced in the first transverse direction, due to the displacement of the skates (12a, 12b), producing the displacement in the second transverse direction of said chain guides (17a, 17b) when connected, by means of the corresponding connecting rod (31) and the corresponding tie rod (39), to the corresponding crankshaft (36a, 36b), and when connected by means of a sliding connection with the corresponding skate (12a, 12b).

17. The adjustable system for displacing lids (4), according to the preceding claim, wherein the first transverse adjustment mechanism comprises three stability assemblies, distributed longitudinally, in a section comprised between the upper rotation system and the lower rotation system.

18. The adjustable system for displacing lids (4), according to claim 17 or 18, wherein the first transverse adjustment mechanism comprises a lower table (40) rigidly affixed to the chassis (10) of the adjustable system and connected by means of a corresponding hinged articulated joint, with respect to a longitudinal axis, to a lower end portion of each of the four crankshafts (36a, 36b).

19. The adjustable system for displacing lids (4), according to claim 17 or 18, wherein the first transverse adjustment mechanism comprises a flat flange (42) joined to the chassis (10), by means of a centring support (43), and connected by means of a corresponding hinged articulated joint, with respect to a longitudinal axis, to an upper end portion of each of the four crankshafts (36a, 36b).

20. The adjustable system for displacing lids (4), according to the preceding claim, wherein the first transverse adjustment mechanism comprises four modular pinions (44a, 44b) each connected to one end of each of the four crankshafts (36a, 36b), arranged so that each of said modular pinions (44a, 44b) comprises a section geared with two other geared sections of two corresponding modular pinions (44a, 44b).

21. The adjustable system for displacing lids (4), according to any of the preceding claims; comprising a drive wheel (9) connected to an actuation element (11) by means of a drive chain (13), wherein said drive wheel is configured to transmit a rotation movement to the lower gearwheels (6a, 6b).
